# EUROPEAN PATENT SPECIFICATION

(11) **EP 2 543 170 B1**
(45) Date of publication and mention of the grant of the patent: **02.03.2016**
(21) Application number: 11712711.8
(22) Date of filing: 02.03.2011
(51) Int. Cl.: H04L 29/06

(54) **METHOD FOR SECURE CONNECTION INITIATION WITH HOSTS BEHIND FIREWALLS**
VERFAHREN ZUR INITIIERUNG EINER SICHEREN VERBINDUNG MIT HOSTS HINTER FIREWALLS
METHODE DE LANCEMENT DE CONNEXION SÛRE AVEC DES ORDINATEURS HÔTES DERRIÈRE DES PARE-FEUX

(30) Priority: 05.03.2010 US 718565
(43) Date of publication of application: 09.01.2013
(73) Proprietor: ALCATEL LUCENT, 92100 Boulogne-Billancourt (FR)
(72) Inventor: HAMPEL, Karl, Georg, New York NY 10280 (US); CHERUBINI, Davide, Castleknock Dublin 15 (IE); RAZAVI, Rouzbeh, Blanchardstown Dublin 15 (IE)
(74) Representative: Knecht, Ulrich Karl
(86) International application number: PCT/US2011/026782
(87) International publication number: WO 2011/109461

(56) References cited:
- WO-A1-2010/002381
- WO-A2-01/33320
- US-A1- 2003 131 258
- US-B1- 7 234 161

## Description

### Field of the Invention

The invention is directed to packet data networks, particularly to initiating a secure connection between two host systems, one of which is connected to the packet data network via a firewall. Hereinafter, such connectivity of a host system to a packet data network is referred to as the host system being behind a firewall.

### Background of the Invention

Firewalls (FWs) and network address translators (NATs) apply the following security feature: The FW accepts inbound packets only if they arrive in response to an outbound packet that has passed the FW before. The FW requires that inbound packets match the prior outbound packet with respect to the 5-tuple of {Protocol type, Source IP address, Source Port, Destination IP address, Destination Port}.

This FW security feature allows an inside host (i.e. a host system behind a firewall) to open a connection with any outside host (i.e. a host system not behind the same firewall), unless additional filtering features are applied. Outside hosts, however, cannot solicit connections with inside hosts.

Unfortunately, the FW security feature has the side effect that it prohibits connection establishment initiated by an outside host even if it is desirable to the inside host. A complete dead lock is created when two hosts are behind different FWs and wish to establish a connection. In that case, the two hosts cannot communicate directly with each other.

The FW security feature is also built into most network address translators or network address & port translators, here simply referred to as NATs. Therefore, hereinafter everything stated about FWs is also generally applicable to NATs.

Furthermore, the FW security feature also creates problems for technologies that support host-based mobility like Mobile IPv6 (IETF RFC 3775). These technologies allow a host to move and change its IP address without disrupting ongoing transport connections. The moving host must update its correspondent nodes (CN) about its new IP address using a binding update. However, since the binding update arrives from a new IP address, the security feature will cause the FW to block the binding update.

There are two principle solutions to overcome this undesirable side effect caused by the FW security feature: 1) the FW opens a port for outside hosts to contact inside hosts, and 2) the inside host sustains a signaling connection to an outside relay server (RS) which can be contacted by any outside host. The second solution, for instance, is proposed by the TURN method (draft-ietf-behave-turn-04.txt). The TURN method is further an integral of the Interactive Connection Establishment (ICE) approach (draft-ietf-mmusic-ice-tcp-07) proposed by the IETF.

Both solutions jeopardize the security of the FW since the internal host can become a victim of an attack performed through the open port on the FW or RS. Some variants of the second solution provide additional security on the link between the internal host and the RS. These variants, however, have no impact on the principal vulnerability introduced to inside hosts. It seems that due to this vulnerability, TURN and ICE have not had much acceptance in the market. FW managers tend to disfavor such services and other RS-based methods for the same reason.

US 7 234 161 B1 describes a method for deflecting connection flooding attacks, in which half-open connections are closed after a certain timer threshold.

WO 01/33320 A2 discloses a firewall, which only allows access to a host if the originating address is explicitly allowed by user-configurable security settings.

In view of the foregoing, it would be desirable to maintain the beneficial security functions of FWs and at the same time allow an outside host to initiate connection establishment with an inside host. Further, where the outside host has moved to a new IP address, it would be desirable to allow a connection established with the inside host to continue.

### Summary

The invention is defined in independent claim 1. Embodiments of the invention are directed to an inter-host signaling protocol, referred to herein as Knock-On Protocol (KOP), for establishing a connection with a host behind a firewall.

Some embodiments of the invention are directed to a Knock-On Feature (KOF) used by intermediate firewalls or network address translators to enable connection establishment through the FW or NAT to the hosts behind the FW or NAT.

Some embodiments of the invention provide security by limiting the frequency of attempts for an outside host to establish a connection with an inside host.

In embodiments of the invention where the KOF is integrated into a FW or NAT, and in embodiments where the KOF is implemented in series with a FW or NAT, additional security can advantageously be provided by "plugging" (i.e. closing or deleting) open 5-tuple entries after corresponding connections have been terminated.

In some embodiments of the invention the KOF advantageously includes a prefix-based protection feature to protect against address spoofing used in message flood attacks.

Advantageously, typical processing and memory requirements of the KOF according to embodiments of the invention are small compared to those of the FW or NAT.

According to an aspect of the invention a method is provided of establishing a connection between a first host system and a second host system through a firewall providing security protection to second host system. The method comprises, performing by a knock-on-feature (KOF) apparatus, the steps of: receiving a first message sent by the first host system; determining the first message is of a first type for establishing the connection between the first host system and a second host system; determining respective addresses of the first and second hosts systems from the first message; determining if any state information exists on the KOF apparatus for a 2-tuple corresponding to the addresses of the first and second host systems; and sending the first message to the first host system if no said state information for the 2-tuple exists on the KOF apparatus.

Advantageously, the method may further include the steps of: determining an amount of state information existing on the KOF apparatus with respect to the second host system; and combining, responsive to the amount exceeding a predetermined maximum, state information of two host system pairs, each pair comprising the second host system and another host system that is different in each pair, into state information for one host system pair comprising the address of the second host system and an address prefix common to respective addresses of the other host systems of the two host system pairs.

### Brief Description of the Drawings

The foregoing and other objects, features and advantages of the invention will be apparent from the following more particular description of the preferred embodiments, as illustrated in the appended drawings, where:
**Figure 1** illustrates states and state transitions pertaining to 5-tuples of a typical prior art firewall architecture.
**Figure 2** illustrates the finite state machines (FSMs) for inbound packets (top) and outbound packets (bottom) of a typical prior art firewall architecture. The flow charts do not include 5-tuple state transitions shown in **Fig. 1** that are due to timer expiry.
**Figure 3** illustrates respective network architectures for (a) KOF integrated into a FW, (b) KOF in series to a legacy FW, and (c) KOF on external RS, according to embodiments of the invention;
**Figure 4** illustrates KOP message call flows of the integrated KOF firewall architecture according to the embodiment depicted in **Fig. 3** part a;
**Figure 5** illustrates states and state transitions pertaining to 5-tuples and 2-tuples of the integrated KOF firewall architecture according to the embodiment depicted in **Fig. 3** part a;
**Figure 6** illustrates states and state transition pertaining to 5-tuples and 2-tuples of the KOF in series with legacy firewall architecture according to the embodiment depicted in **Fig. 3** part b;
**Figure 7** illustrates KOP message call flows of the KOF provided in external RS architecture according to the embodiment depicted in **Fig. 3** part c;
**Figure 8** illustrates the FSMs for inbound packets of the integrated KOF firewall architecture according to the embodiment depicted in **Fig. 3** part a. The flow charts do not include state transitions shown in **Fig. 5** that are due to timer expiry.
**Figure 9** illustrates the FSM for outbound packets of the integrated KOF firewall architecture according to the embodiment depicted in **Fig. 3** part a. The flow charts do not include state transitions shown in **Fig. 5** that are due to timer expiry.
**Figure 10** illustrates FSMs for inbound packets of the KOF in series with firewall architecture according to the embodiment depicted in **Fig. 3** part b. The flow charts do not include state transitions shown in **Fig. 6** that are due to timer expiry.
**Figure 11** illustrates FSMs for outbound packets of the KOF in series with firewall architecture according to the embodiment depicted in **Fig. 3** part b. The flow charts do not include state transitions shown in **Fig 6** that are due to timer expiry.

In the figures like features are denoted by like reference characters.

### Detailed Description

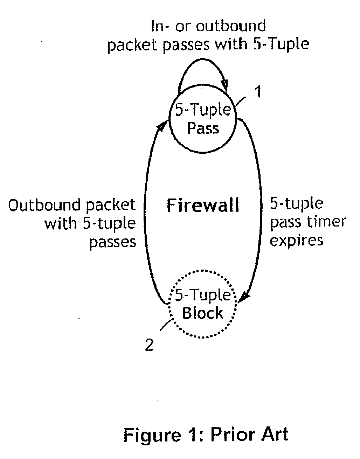

In reference to **Figure 1****,** on the FW every 5-tuple pertaining to an actually or potentially existing connection can be associated with either of two states: a Pass state **1** or a Block state **2,** where the associated Pass and Block functions apply to inbound packets. Each 5-tuple changes from Block state **2** to Pass state **1,** when an outbound packet with this 5-tuple is passing. The Pass state **1** is associated with a life time. After life-time expiration the 5-tuple returns to the Block state **2.** In Pass state **1,** the timer can be refreshed with every outbound or inbound packet holding the corresponding 5-tuple.

In the typical FW implementations, only 5-tuples in Pass state **1** require allocation of cache memory. Since the Block state **2** is the default state and does not carry time-sensitive information, it does not require allocation of cache. The following data are typically held on the FW for a 5-tuple in Pass state: 5-tuple and expiration time.

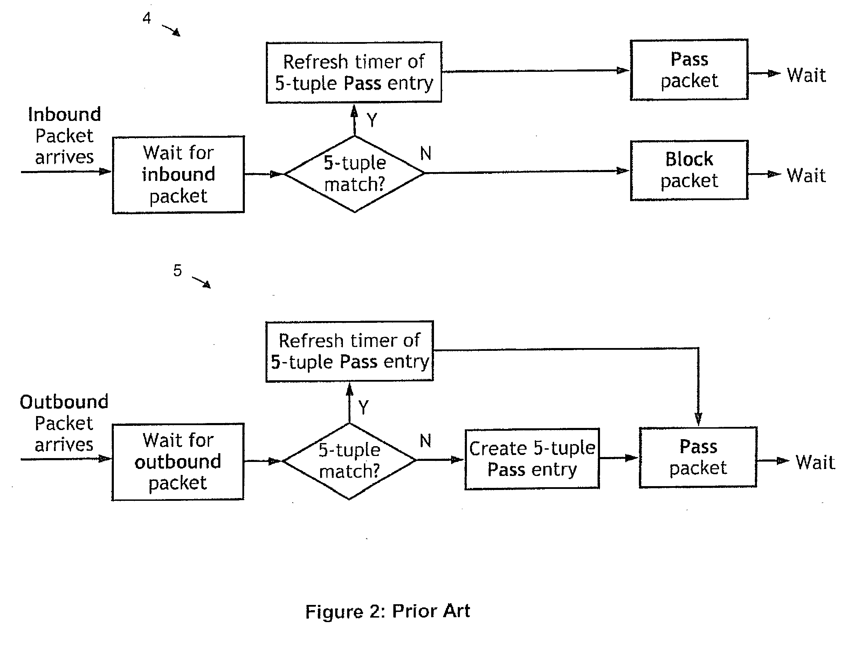

In reference to **Figure 2****,** the FW function can be represented through two finite state machines (FSMs). One state machine **4** handles inbound packets, the other state machine **5** outbound packets. Note that the FSM-diagrams in **Fig.2** omit state transitions due to state expiry.

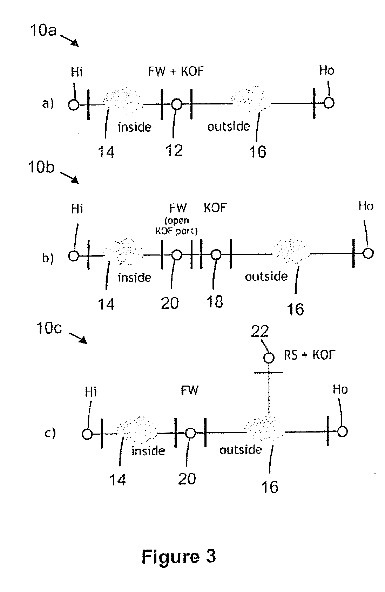

With reference to **Figure 3****,** the KOP should be used by end hosts as a courtesy procedure to frame inter-host connection management. Additional functionality, such as authentication for instance, can be embedded into these messages.

The KOP messages can be intercepted, evaluated and acted upon by the KOF on a FW. Based on some conditional rule set, inbound KOP messages can be passed by the KOF on the FW to an inside host. Due to careful definition of KOP messages and the KOF rule set, connection establishment through the FW can be provided in a very secure manner. The following sections outline how the KOF is designed so that it does not impair the FW's security function.

KOP messages are based on a transport connection given by a 5-tuple. Therefore, KOP messages carry the corresponding 5-tuple information. The KOP supports the following messages:
- **KOP REQ:** Requests connection establishment on behalf of a specific 5-tuple.
- **KOP ACK:** Accepts connection establishment in response to a KOP REQ message.
- **KOP NAK:** Declines connection establishment in response to a KOP REQ message.
- **KOP RSP:** Requests more information in response to a KOP REQ message. The reply to this message would be another KOP REQ message.
- **KOP FIN:** Terminates a 5-tuple connection.

The first four messages above are used prior to, or at, the time of connection establishment, and the last message at, or after, connection termination. During the life-time of a connection, a KOP client on a host need not keep any state information.

Apart from the 5-tuple, KOP messages can principally carry any additional information. For example, the KOP REQ message could carry embedded information that convinces a peer host to engage into a connection as, for instance, the sending host's authentication credentials. The KOP RSP message allows the peer host to request additional information. By using KOP REQ/RSP message pairs, more complex handshakes can be established.

KOP messages can use a Type-Length-Value format to hold information. KOP messages can use the following transport formats:
- KOP messages can use UDP with a specific port number. In the following, this approach is used for the KOP unless stated differently.
- KOP messages can carry their own protocol type.
- KOP messages can use ICMP.
- The KOP information can be embedded into an IP-options header (IPv4) or IP-extension header (IPv6). This would be an especially good solution for IPv6.
- KOP messages can also be implemented into specific transport protocols. In the case of TCP, for instance, the TCP options header could be used to flag KOP messages. The KOP REQ message, for instance, could be piggy-backed onto a TCP SYN message.
- KOP information can be included into existing signaling protocols, e.g. IKEv2 (IETF RFC 4306).

A KOP-capable host is a host system that can create, send, receive, interpret, and respond to KOP messages for the purpose of establishing and terminating a connection with another host or rejecting a connection initiation request from another host using KOP messages. Preferably, KOP-capable hosts are able to interoperate with legacy hosts. For example, when a KOP-capable host sends a KOP REQ message to a legacy host to establish a connection, no response will occur. In this case, the KOP-capable host may simply give up after a few retransmissions and try to establish a connection with the legacy host in a conventional manner.

Since a purpose of the KOP is to overcome middle boxes such as FWs and NATs, the connection-initiating host may even attempt to establish a connection in parallel to sending a KOP REQ message or after conventional connection establishment has failed. Note that only a FW with KOF will let the KOP REQ message pass. When a receiving host (i.e. a host to which a KOP REQ message is sent) is KOP-capable, it has the opportunity to respond to a KOP REQ message with a KOP NAK or KOP RSP message without engaging in a connection with the connection-initiating host. When the receiving host is a legacy host and not behind a FW, however, the connection can be initiated without delay. This means that conventional call-establishment procedures still work properly when one of the hosts is not KOP-capable.

Care should be taken when the KOP information is carried on IP-options, IP-extension, or TCP-options headers that are multiplexed with a TCP SYN packet of a traffic connection. For example, the KOF feature on intermediate FWs could react to the KOP part of the packet i.e. let it pass, while a receiving legacy host simply discards the KOP part of the message and responds to the TCP SYN packet with TCP SYNACK. This would essentially disable the security function of the FW.

The KOP ACK message is in principle unnecessary since a KOP-capable receiving host can simply take the initiative and start a connection in response to a KOP REQ message. To accommodate this case, the sender of the KOP REQ message can start the connection in parallel at its end. This would create a 5-tuple on its own firewall which would let an incoming traffic packet sent by the receiving host pass.

Referring to **Figure 3****,** a KOF can be provided in three manners as shown in respective network architectures **10a** to **10c,** in which an inside host **Hi** is communicatively connected to an outside host **Ho** via an inside network **14** behind a FW and an outside network **16** on the other side of the FW. Accordingly, the KOF can be provided in a first manner shown a) as an integrated KOF firewall **12,** in a second manner shown in b) as a KOF **18** added in series to a FW **20** which may be a legacy firewall, or in a third manner shown in c) with the KOF provided on a public Relay Server (RS) **22.**

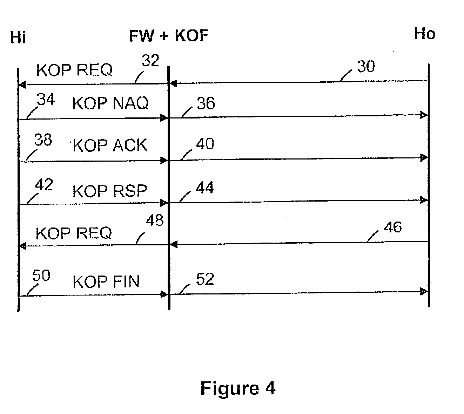

**Figure 4** shows an example call flow of connection establishment and termination for the case of the integrated KOF firewall **12** according to the first network architecture **10a.** These call flows are also applicable to the second network architecture **10b** in which the KOF **18** is added in series to the FW **20.**

Referring to **Figure 4****,** the outside host **Ho** attempts to initiate a connection with the inside host **Hi** by sending **30** a KOP REQ message to the inside host **Hi.** The integrated KOF firewall **12** receives the KOP REQ message and recognizing it as a KOP message, forwards **32** the message to the inside host **Hi.** The inside host **Hi** can respond to the KOP REQ message by sending **34** a KOP NAK message to the outside host **Ho.** The integrated KOF firewall **12** receives the KOP NAK message and recognizing it as a KOP message, forwards **36** the message to the outside host **Ho.** Since the KOP NAK message indicates that the inside host **Hi** declines establishment of the requested connection, upon receipt of the message the outside host **Ho** does not establish the requested connection. Instead of the KOP NAK, the inside host **Hi** can send **38** a KOP ACK message to the outside host **Ho,** that message indicating the inside host **Hi** accepts establishment of the requested connection. The integrated KOF firewall **12** receives the KOP ACK message and recognizing it as a KOP message, forwards **40** the message to the outside host **Ho.** Upon receipt of the KOP ACK message, the outside host **Ho** begins to establish the requested connection.

As an alternative to sending a KOP ACK or a KOP NAK message, the inside host **Hi** can send **42** a KOP RSP message to the outside host **Ho** to request additional information. The integrated KOF firewall **12** passes **44** the KOP RSP message to the outside host **Ho** as well as passing **48** a second KOP REQ message that the outside host **Ho** sends **46** to the inside host **Hi** in response to the KOP RSP message. Upon receiving the second KOP REQ message, the inside host **Hi** has the same options as before when the first KOP REQ message was received. In the case where the inside host Hi has established a connection and wishes to terminate this connection, the inside host **Hi** signals the outside host **Ho** that the connection is to be terminated by sending **50** a KOP FIN message thereto via the integrated KOF firewall **12** which passes **52** the message to the outside host **Ho.**

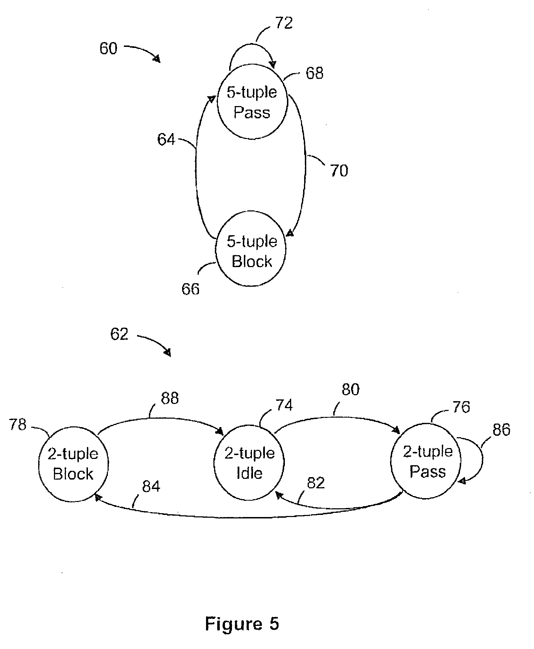

Referring to **Figure 5****,** the integrated KOF firewall **12** function can be associated with 5-tuples **60** pertaining to inbound traffic packets and 2-tuples 62 pertaining to inbound KOP REQ packets. A 5-tuple **60** state determines if an inbound traffic packet should be passed or blocked. A 2-tuple **62** state determines if an inbound KOP REQ message should be passed or blocked. The 2-tuple refers to the {Hi, Ho} IP address pair where Hi represents the inside host **Hi** and Ho represents the outside host **Ho.** Note that the outside host **Ho** can also reside behind its own FW.

Generally, KOP messages are only passed if there is a corresponding 2-tuple entry which is in a Pass state. If such an entry does not exist, the KOF will create such an entry and set it to the Pass state. The KOF will not pass a KOP REQ message if there is a corresponding 2-tuple entry in a Block state. This bimodal behavior of 2-tuples provides the following functionality: the Pass state checks if the arrival rate of KOP REQ messages is below a critical level, and if so then KOP REQ messages will be allowed to pass; otherwise the Block state will be invoked to protect the inside host Hi from the arrival of further KOP REQ messages.

While each 5-tuple can be in either Pass state **68** or in Block state **66,** each 2-tuple can be in one of Idle state **74,** Pass state **86** or Block state **78.** The KOF integrated FW does not hold any cache memory for the 5-tuple Block state **66** or the 2-tuple Idle state **78** since these states are the default states and they do not carry any time-sensitive information. For the 5-tuple Pass state **68,** the KOF-integrated FW caches the 5-tuple and an expiry time. For the 2-tuple pass state **86** it caches the 2-tuple, an expiry timer and a message counter. For the 2-tuple Block state **78,** it caches the 2-tuple and an expiry timer.

The KOF integrated FW **12** maintains **72** a 5-tuple Pass state **68** entry to an existing connection between an inside host **Hi** and an outside host **Ho** or a connection establishment attempt by the inside host **Hi.** The KOF integrated FW **12** maintains **86** a 2-tuple Pass state entry {Hi, Ho} to control the rate of inbound KOP REQ messages when the outside host Ho attempts to establish a connection with the inside host Hi. The KOF integrated FW **12** maintains a 2-tuple Block state **78** entry to protect the inside host Hi from further KOP REQ message attempts by the outside host Ho in case such messages are not desired by the inside host Hi or the outside host Ho has exceeded the acceptable rate of KOP REQ messages it has sent to the inside host Hi.

The functionality based on 5-tuples **60** is similar to that provided by a conventional FW with some exceptions. First, its blocking function does not apply to inbound KOP REQ messages. Instead, inbound KOP REQ messages are subject to the state of their associated 2-tuple **62.** Second, the 5-tuple **60** entry is not created upon traversal of outbound KOP REQ, RSP or FIN messages.

In addition to conventional FW functionality, the 5-tuple **60** undergoes a transition **64** from a Block state **66** to Pass state **68** when an outbound (i.e. sent from the inside host **Hi)** KOP ACK message corresponding to the 5-tuple is passed through the integrated KOP firewall **12.** This transition **64** also occurs when an ordinary packet (i.e. a packet not carrying a KOP message) is passed through the integrated KOP firewall **12.**

In addition to the conventional FW functionality, the 5-tuple **60** further undergoes a transition **70** from the Pass state **68** to the Block state **66** when an outbound KOP FIN packet corresponding to the 5-tuple **60** is passed through the integrated KOP firewall **12.** This feature allows the inside host **Hi** to close a 5-tuple entry on a FW for a connection that has terminated, which provides substantial security to the inside host **Hi** since the entry, which could otherwise become a "security hole" (or security vulnerability) can be closed by inside host **Hi.**

The integrated KOP firewall **12** includes a timer for the Pass state **68** of each 5-tuple, which timer upon expiring causes the transition **70** from the Pass state **68** to the Block state **66.** Otherwise, the 5-tuple **60** maintains **72** the FW state in the Pass state **68,** with the passage through the integrated KOP firewall **12** of inbound or outbound packets corresponding to the 5-tuple **60.** The functionality associated with the timer in Pass state **68** as well as transition **70** from the Pass state **68** is the same as for a conventional firewall.

Every 2-tuple **62** is based on the {Hi IP address, Ho IP address}-pair contained in KOP messages between an inside host **Hi** and an outside host **Ho.** The KOF integrated FW **12** maintains the 2-tuple **62** in one of three states: an Idle state **74,** a Pass state **76,** and Block state **78.** The KOF-integrated FW **12** operates in the following manner. When in the Idle state **74** and an inbound KOP REQ message arrives for the corresponding inside host **Hi,** the 2-tuple **62** transitions **80** to the Pass state **76** and lets the KOP REQ message pass through the integrated KOF firewall **12.** The Pass state **76** has a lifetime attribute and a max-count attribute. During the lifetime of the Pass state **76,** which is determined by the value of the lifetime attribute, only a maximum number, equal to the value of the max-count attribute, of KOP REQ messages can be forwarded for this 2-tuple. If the lifetime of the Pass state **76** expires before this maximum number of KOP REQ messages is reached, the 2-tuple **62** transitions **82** to the Idle state **74.** If the maximum number of KOP REQ messages is reached before the Pass state **76** lifetime expires, the 2-tuple **62** transitions **84** to the Block state **78.** Otherwise the 2-tuple **86** in the Pass state **76** refreshes **86** the Pass state with the passage of outbound KOP REQ and KOP RSP messages of the 2-tuple through the integrated KOF firewall 12. The transition 86 resets the Pass-state timer and the Pass-state counter of the Pass state 76. In the Block state **78,** further inbound KOP messages from the outside host **Ho** to the inside host **Hi** are rejected by the integrated KOF firewall **12.** The Block state **78** has its own lifetime attribute, the value of which determines the lifetime of the Block state **78.** After expiration of the Block-state's **78** lifetime the 2-tuple **62** transitions **88** to the Idle state **74.**

If the inside host **Hi** receives a KOP REQ message and it is not interested in establishing the requested connection, the inside host **Hi** can respond to the connection-initiating outside host **Ho** with a KOP NAK message. This KOP NAK message will cause the 2-tuple **62** on the KOF integrated FW **12** to transition **84** from the Pass state **76** directly to the Block state **78,** which will cause the integrated KOF firewall **12** to block further KOP REQ messages sent from the outside host **Ho** to the inside host **Hi.**

In the case where the KOF state is in the Pass state **76** and the corresponding inside host **Hi** sends an outbound KOP RSP message to request more information from the corresponding outside host **Ho,** the KOF integrated FW **12** resets Pass-state timer and a Pass-state counter for the 2-tuple **62.** The KOF integrated FW **12** uses the Pass-state timer and Pass-state counter to determine whether the corresponding Pass state lifetime has expired for that 2-tuple **62** or whether a maximum number of messages allowed while in the Pass state **76** has been reached. This reset capability gives outside host **Ho** an opportunity to respond to the KOP RSP message with a KOP REQ message including any retransmissions that may be necessary.

The KOP RSP and ACK messages sent by the inside host **Hi** can also serve as a KOP REQ message in the case where the outside host **Ho** also resides behind a FW. A KOP REQ/RSP or REQ/ACK message handshake would therefore clear the path on both firewalls. Such a handshake enables connection establishment in a secure manner when both hosts are behind firewalls.

With this set of features, the KOF provides the following protection via the integrated KOF firewall **12:** while it opens the FW to pass a certain type of control message to the inside host **Hi,** it restricts the inbound packet flow of such messages to max-count per Pass state **76** lifetime. If this rate (determined by the values of the Pass state **76** max-count and lifetime attributes) is exceeded by an outside host **Ho,** the Block state **78** protects the inside host **Hi** from additional KOP REQ messages for some extended period of time. The value of the Pass state **76** lifetime attribute is advantageously set to a few seconds so that multiple KOP REQ message retransmissions can be accommodated. The value of the Block state **78** lifetime attribute should result in a longer lifetime than the Pass state's **76** lifetime, so that Block state **78** protects the inside host **Hi** from KOP REQ message flood attacks (e.g. the Block state's **78** lifetime would be in minutes or even hours).

To improve on the aforementioned protection provided by the KOF in the integrated KOF firewall **12,** the packet length of KOP messages could be restricted to a specified maximum length. It is advisable to keep the total message length below 576 octets, which means that packet fragmentation is not applied. Accordingly, before acting on a KOP message, the KOF would evaluate the length of the packet carrying the KOP message and discard the packet if its length exceeds the specified maximum length.

For further enhancing protection provided by the KOF, a specific TLV format could to be introduced for KOP messages. While this format would be flexible in type definition and value length, it would provide additional protection for hosts by enabling the integrated KOF firewall **12** and hosts to discard KOP messages whose type definition they do not recognize.

Note that the KOF does not prohibit inside hosts from establishing connections with outside hosts whose KOP REQ messages they have rejected. This capability means that the KOF integrated **FW 12** can maintain 5-tuple **60** in the Pass state **68** even though the 2-tuple **62** of the corresponding host pair is holding the Block state **78.** This behavior is important since it makes the integrated KOF firewall **12** compliant with legacy FW functionality.

The states of the 2-tuple **62** can be implemented in rather simple fashion: since the Idle state **74** does not hold any time-sensitive information, it does not require allocation of memory. Therefore, only 2-tuples in the Pass state **76** or in the Block state **78** are held in memory. For this purpose, the following data structures are held in memory:

### KOF Pass state:

- 2-tuple
- Expiration time (time when Pass state lifetime will expire)
- Counter (counts number of KOP messages either up to, or down from, the value of the max-count attribute)

The KOF Pass state expiration time implements the aforementioned Pass-state timer and the KOF Pass-state counter implements the aforementioned Pass-state counter.

### KOF Block state:

- 2-tuple
- Expiration time (time when the Bock state lifetime will expire)

Under normal operation, the number of KOF states to be held in memory would be negligible. This number, however, can grow substantially during a message flood attack. Under such circumstances prefix-based protection, which is described in the next section, would be beneficial.

### Prefix-Based Protection

While the KOF integrated **FW 12** limits the rate of KOP REQ messages that arrive at each inside host **Hi,** it should also protect the inside hosts from flood attacks of KOP REQ messages. This includes attacks that lead to overload of the KOF itself. Under such circumstances, the KOF should rather temporarily subside its functionality which reverts the integrated KOF firewall **12** functionality to that of a conventional FW.

The KOF can become vulnerable to a flood of KOF REQ messages originated from a multitude of spoofed IP addresses and directed toward one inside host **Hi.** That is because the KOF would maintain one entry **62** for every resulting 2-tuple of the KOF REQ messages originating from every spoofed IP address, which would result in the integrated KOF firewall **12** letting the entire flood of messages pass.

In principle, IP address spoofing is undermined through ingress filtering by intermediate routers. However, ingress filtering is not always enforced. Further, attackers may still be able to spoof IP addresses pertaining to the same L2 network, i.e. one L3 subnet.

The KOF can protect against such flood attacks by extending the primitive 2-tuple of {Hi IP address, Ho IP address} introduced above to the following prefix-based form of {Hi IP address, Ho IP prefix}. In the prefix-based form, all incoming KOP REQ messages for the inside host **Hi** that are compliant with outside host's Ho prefix would be handled by the same 2-tuple **62** using the same KOF state.

The extension of a 2-tuple **62** from the primitive to the prefix-based form needs to be done gradually since blocking based on IP prefix may also reduce accessibility for a large number of friendly hosts. A variety of algorithms can be introduced for this purpose. One simple and very effective method is the following:
- For each inside host **Hi,** the KOF can only maintain a certain maximum number **N** of 2-tuples that are in either Pass state **76** or Block state 78 since these two states require memory allocation. The 2-tuples that hold either of these two states are referred to as 2-tuple entries.
- When the number of 2-tuples entries for inside host Hi reaches N and a new inbound KOF REQ arrives for the inside host **Hi** resulting in the generation a new 2-tuple entry in Pass state **76,** two of the inside host's 2-tuples entries have to be combined into a single 2-tuple entry. The combined 2-tuple entry uses the intersection of the IP addresses of the outside hosts **Ho,** each corresponding to a respective one of the aforementioned two 2-tuple entries, as a "prefix". Note that the term prefix is not used in the sense of subnet assignment here.
- If both 2-tuple entries have the same state (Pass state **76** or Block state **78),** this state is carried over to the combined 2-tuple entry. If this state is the Pass state **76,** the counter of the combined 2-tuple entry is set to the maximum of the counters of the prior 2-tuple entries, and the combined expiry time is set to the minimum of the expiration times of the prior 2-tuple entries. If this state is the Block state **78,** the expiration time of the combined 2-tuple entry is set to maximum of the expiration times of the prior 2-tuple entries.
- If both 2-tuple entries have different state (one is in the Pass state **76** and the other in the Block state **78),** the combined 2-tuple entry is set to the Block state **78** and the expiration time is reset.
- The selection of the 2-tuple entry is used for the combining procedure can be based on longest prefix for the merged 2-tuple. The longer this prefix is the smaller is the topological distance between the IP addresses of the outside Hosts. The computational effort of this selection process is rather small since the number N can be chosen rather small.

### Example: N = 3:

The inside host **Hi** already has N = 3 2-tuple entries when a new KOF REQ arrives for the inside host **Hi:**

| State | Hi's IP address | Ho's IP address | State | Message counter | Expiration time |
|---|---|---|---|---|---|
| 1 | 100.1.1.0 | 200.1.1.5 | Pass | 3 | Now + 6544 msec |
| 2 | 100.1.1.0 | 223.1.1.4 | Pass | 5 | Now + 897 msec |
| 3 | 100.1.1.0 | 200.1.2.3 | Pass | 1 | Now + 3120 msec |
| New | 100.1.1.0 | 114.2.45.4 | Pass | 1 | Now + 9000 msec |

2-tuple entries 1 & 3 are combined because they have largest common prefix, which results in the following:

| State | Hi's IP address | Ho's IP address | State | Message counter | Expiration time |
|---|---|---|---|---|---|
| 1 | **100.1.1.0** | **200.1.×.×** | **Pass** | **3** | **Now** + **3120 msec** |
| 2 | 100.1.1.0 | 223.1.1.4 | Pass | 5 | Now + 897 msec |
| 3 | 100.1.1.0 | 114.2.45.4 | Pass | 1 | Now + 9000 msec |

- The combined KOF state, now shown as state 1, has an outside host **Ho** IP address of 200.1.X.X. which is in the so-called prefix-based form due to the 'X.X' used for the least significant two octets of the IP address. The 'X.X' matches all values for the corresponding octets of IP address of outside hosts. Further, the Pass-state counter (message counter) of the combined KOF state is set to three, which is the greater of the values of the Pass-state counters of prior KOF states 1 and 3. The Pass-state timer (expiration time) of the new KOF state is set to 'Now+3120 msec' which is the shorter of the Pass-state timers of the prior KOF states 1 and 3.

The KOF need not keep any information about the history of 2-tuple entry combining. The state transitions apply to prefix-based states in the same fashion as to conventional IP-address-based states. Once the Idle-state **74** is reached, state bundling information is lost since no memory is kept in the Idle state **74.** This mechanism smoothly reverses the state bundling and allows the KOF to relax to its normal operation mode.

The above combining process is based on the maximum number N of 2-tuple entries for an inside host **Hi.** This number can be adjusted dynamically. Either, a fixed value for **N** is allocated to each inside host **Hi,** or alternatively, one common pool of 2-tuple entries can be allocated on behalf of all inside hosts **Hi.** If this pool is filled and new 2-tuple entries are to be added, the inside host **Hi** with the largest number of 2-tuples can be selected. If this pool is smaller than the number of inside hosts **Hi,** it can happen that the pool is filled while every inside host **Hi** does not hold more than one 2-tuple entry. In this case, the same combining procedure can be applied with respect to the **Hi-IP** addresses. In this case, 2-tuple entries can hold prefixes on behalf of inside host **Hi** as well.

With prefix-based protection, a flood attack of KOF REQ messages on an inside host **Hi** using a pool of source IP addresses leads to one 2-tuple entry in the Block state **78** with the outside host **Ho** IP address prefix pertaining to the attacker's subnet. All further KOP REQ messages to that inside host **Hi** from the attacker will be blocked by the integrated KOP firewall **12.** At the same time, the integrated KOP firewall **12** will operate normally with respect to an outside host from another subnet that attempts to establish a connection with the inside host **Hi.**

Note that such flood attacks are usually limited to the IP addresses pertaining to one subnet since ingress filtering of intermediate routers discards packets of mysterious origin. Even in the unlikely event where the attacker spoofs IP addresses from the entire internet, prefix-based protection would end up blocking all incoming KOF REQ messages. In this limit, the integrated KOF firewall **12** would provide the same protection as a conventional FW.

In addition to protecting internal hosts **Hi** from KOP REQ message flood attacks, prefix-based protection advantageously limits the amount of memory needed for the 2-tuple entries. Further advantageously, prefix-based protection reduces computational effort when new KOP REQ messages arrive for an inside host **Hi** since only a small number of KOF states are held for the respective host.

### Knock-On Feature in Series with Legacy Firewall

Referring again to **Figure 3****,** in particular to the second network architecture **10b,** the KOF **18** can also be added as a separate function in series to a firewall **20.** This is especially easy to accomplish if UDP-based KOP messages are used. In this case, the corresponding UDP port would be opened on the firewall.

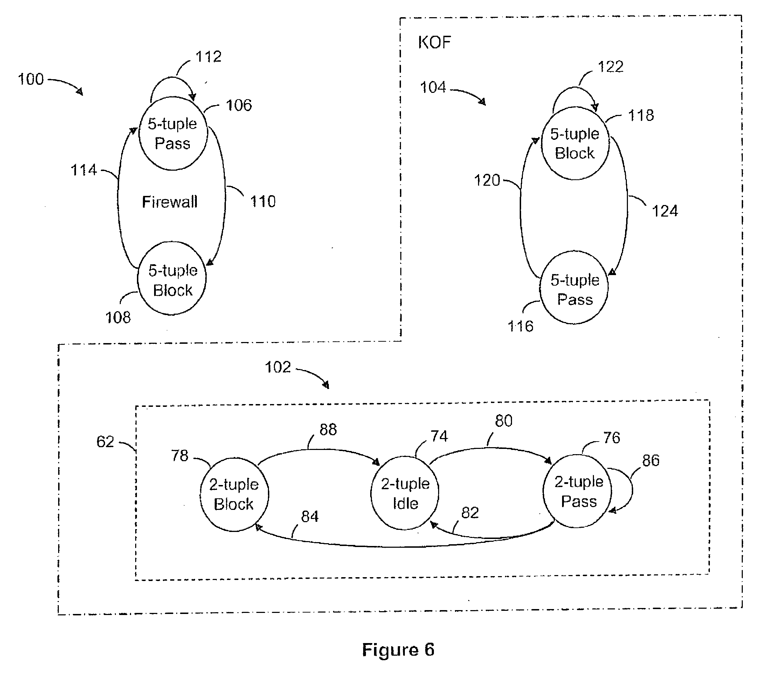

**Figure 6** illustrates 5-tuple and 2-tuple states and state transitions of the KOF **18** and firewall **20** of the second network architecture **10b,** in which the KOF **18** is in series with the firewall **20.** The firewall **20** in this case is a legacy firewall supporting 5-tuple **100** that provides conventional firewall functionality. The KOF **18** supports 2-tuples **102** that operate in the same manner as the 2-tuples **62** previously described with respect to the integrated KOF firewall **12,** and 5-tuples **104.**

The 5-tuple **100** maintains a state for a corresponding 5-tuple associated with a connection between an inside host **Hi** and an outside host **Ho.** The FW **20** controls whether a particular 5-tuple should remain in a Pass state **106** or in a Block state **108,** or make a transition from the Pass state **106** to the Block state **108** or visa versa. While in the Pass state **106** a pass-timer is updated, and upon expiration of the pass-timer the 5-tuple **100** state will transition **110** from the Pass state **106** to the Block state **108.** Otherwise, the FW state will remain **112** in the Pass state as long as inbound or outbound packets of the corresponding 5-tuple are passed through the firewall **20.** When remaining in the Pass state **106,** the timer associated with the Pass state **106** is reset. While in the Block state **108,** the FW state will transition **114** from the Block state **108** to the Pass state **106** when an outbound packet of the corresponding 5-tuple is passed by the firewall **20.**

The KOF **18** maintains 2-tuples associated with inbound KOP REQ messages between an inside host **Hi** and an outside host **Ho.** Since the firewall **20** bridges KOP messages, the KOF **18** can operate 2-tuples **102** in this second network architecture **10b** in the same manner as the KOF integrated FW **12** operated 2-tuples **62 .** For simplicity of the foregoing description of this embodiment, the KOF **18** handling of 2-tuples **102** will be understood to be implemented in an identical manner as for the 2-tuples **62** in the KOF integrated FW **12.**

Unlike the integrated approach of the first network architecture **10a,** the KOF **18** of the second network architecture **10b** acts on 5-tuple **104** in series to the FW **20** acting on 5-tuples **100.** The 5-tuple maintained by the KOF **18** corresponds to any actual or potential connection between inside host **Hi** and an outside host **Ho.** The KOF **18** controls whether the 5-tuple **104** should remain in a Pass state **116** or in a Block state **118,** or make a transition from the Pass state **116** to the Block state **118** or visa versa. The KOF **18** supports KOP FIN messages, i.e. to block incoming traffic packets of the 5-tuple to the inside host **Hi** based on an outbound KOP FIN message from the inside host **Hi.** Accordingly, when the KOF 5-tuple state **104** is in the Pass state **116** and a KOP FIN message corresponding to the 5-tuple **104** is passed through the KOF **18** in outbound direction, the 5-tuple **104** in Pass state **116** transitions **120** to the Block state **118.** Otherwise, if the KOF 5-tuple state **104** is already in the Block state **118** when the KOP FIN message is passed through the KOF **18,** the KOF 5-tuple state **104** remains **122** in the Block state **118** and resets the 5-tuple Block state timer. If the Block state timer expires or if an outbound packet corresponding to the 5-tuple is passed through the KOF **18** from the inside host **Hi,** the 5-tuple **104** transitions **124** the from the Block state **118** to the Pass state **116.** The Block state timer expires after a time equivalent to the time taken for the pass-state timer of the 5-tuple **100** to expire.

While the 5-tuple **100** can be realized by implementing only the Pass state **106** for the 5-tuple **100,** the KOF's 5-tuple **104** can be realized by implementing only the Block state **118** for the KOF's 5-tuple **104.** Accordingly, the memory requirements for the KOF's 5-tuple **104** would be approximately the same or less as for those of the FW's 5-tuple **100.** That is, regarding the FWs 5-tuple **100,** the FW states in the Pass state **106** occupy memory for the lifetime of their corresponding connections plus the lifetime of the Pass state **106.** Whereas, for the KOF's 5-tuple **104,** KOF 5-tuple states in the Block state **118** occupy memory only for the Block state's **118** lifetime, which is determined by a respective Block state timer, and as previously mentioned, a Block state timer expires after a time equivalent to the time taken for the pass-timer of the FWs 5-tuple **100** Pass state **106** to expire.

The combination of the 5-tuple **100** operation and the KOF 5-tuple **104** operation of the second network architecture **10b,** accomplish the same function as the 5-tuple **60** operation in the integrated KOF firewall **12.** The serial solution of the second network architecture **10b,** however, does not support KOF ACK messages. Advantageously, the effect of a KOF ACK message can be achieved by a normal traffic packet.

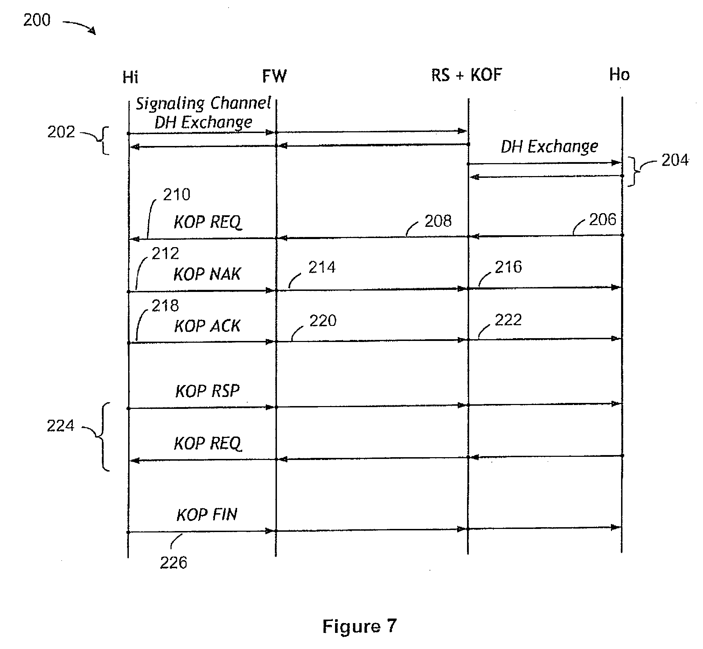

Referring to **Figure 7** and the corresponding third network architecture 10c, in which the KOF is provided on a relay server (RS) **22** that supports a legacy FW **20.** The RS **22** is assumed to be in the public internet or at least addressable from the public internet. Further, the inside host **Hi** has a signaling connection to the RS **22.** We assume that inside host **Hi** uses a domain name server (DNS), for instance, to publish an IP address, protocol type and port of the RS **22,** through which it can be reached.

To provide an equivalent level of security as that of the integrated KOF firewall **12,** in the third network architecture **10c** the traffic along the signaling connection between the inside host **Hi** and the RS **22** is integrity protected. This is done since the signaling traffic passes the public internet and is therefore vulnerable to integrity attacks.

When the outside **Ho** sends a KOP REQ message to the RS **22,** the outside host **Ho** needs to explicitly refer to the inside host **Hi** in the payload of the KOP REQ message. This is different to the first network architecture **10a** where the integrated KOF firewall **12** can infer the inside host **Hi** from the IP header of the KOP REQ message. In the same fashion, the outside host **Ho** can add information about protocol type and port number in the payload of the KOP REQ message.

This approach, however, adds vulnerability. That is, since the IP address of the inside host **Hi** is not used for routing purposes, but solely carried in the payload of the KOP REQ message, it can be altered by any attacker. To overcome this vulnerability, the outside host **Ho** must protect the integrity of the KOP REQ message sent to the RS **22.**

This integrity protection of a KOP REQ message can be accomplished via public/private key pairs or shared keys. A security association using Diffie-Hellman (DH) exchange, for instance, should be sufficient. To break such shared keys based on DH exchange, a man-in-the-middle (MitM) system would be required that sustains separate connections with each end. In this procedure, the MitM system would need to be able to spoof the IP addresses of the respective end-points without falling victim to ingress filtering by intermediate routers. If such a MitM system exists, it would also be able to overcome the FW **20** directly, i.e. by spoofing IP addresses to existing 5-tuple entries on the FW **20**. Therefore, using DH-based keys for KOP message exchanges between the RS **22** and the outside or inside hosts **Ho/Hi** should be sufficient for integrity protection of these exchanges since it will provide at least the same level of protection as would the legacy FW **20.**

Referring to **Figure 7** and also to **Figure 3** part c, an example message call flow **200** between the RS **22** and the outside and inside hosts **Ho/Hi** occurs as follows:
- The inside host **Hi** and the RS **22** establish **202** a secure signaling connection using DH exchange. This creates a first 5-tuple entry on the FW **20**, which entry corresponds to the inside host **Hi** and the RS **22.**
- The outside host **Ho** establishes **204** a secure connection with RS **22** using DH exchange.
- The outside host **Ho** sends **206** a KOP REQ message to the RS **22** after first integrity protecting the message. The payload of the KOP REQ message contains the inside host's **Hi** data using predefined parameter types. This data includes an IP address, protocol type and port number of the inside host **Hi** to be used for the proposed connection.
- The KOF residing on the RS **22** evaluates the KOP REQ message. For that purpose it uses the same 2-tuple **62** operation previously described with respect to the first and second network architectures **10a** and **10b.**
- If the KOF state for the 2-tuple corresponding to the IP addresses of the inside and outside hosts **Hi** and **Ho** is not in the Block state **78,** the RS **22** tunnels **208** the KOP REQ message to the inside host **Hi** through the signaling link. The RS **22** provides integrity protection for the KOP REQ message, as previously described. The KOP REQ message includes the IP address of the outside host **Ho.**
- The FW **20** lets the KOP REQ message pass **210** since the signaling link on which the message is carried has already been established, as described previously with respect to the creation of the first 5-tuple entry on the FW **20**
- The inside host **Hi** uses information in the KOP REQ message to directly contact the outside host **Ho.** This contact creates a second 5-tuple entry on the FW **20** corresponding to the inside host and outside host **Ho,** which entry allows the outside host **Ho** to directly respond to communications from the inside host **Hi.**
- If the inside host **Hi** wishes to send **212** a KOP NAK message to the outside host **Ho,** it uses the signaling connection to the RS **22,** includes the IP address of the outside host **Ho** and integrity-protects the message. The FW **20** forwards **214** the integrity protected KOP NAK message to the RS **22.** The RS **22** verifies the message and the 2-tuple 62 thereon transitions to the Block state **78** and forwards **216** the KOP NAK message to the outside host **Ho.**
- The inside host **Hi** also has the option of sending **218** a KOP ACK message to the outside host **Ho** in response to the KOP REQ message. The FW **20** forwards **220** the KOP REQ message to the RS **22**. The KOF embedded on the RS **22** holds an entry for the 5-tuple that is the same as the FW 5-tuple **60** previously described, which maintains an FW state corresponding to the 5-tuple of the inside host Hi and the outside host **Ho.** The FW state of the 5-tuple is set to the Pass state **68** when the RS **22** passes **222** the KOP ACK message to the outside host **Ho.** While the FW state of the 5-tuple is in the Pass state **68,** the RS **22** will relay any information from the outside host **Ho** to the inside host **Hi** and visa versa.
- The inside host **Hi** also has the option of sending a KOP RSP message to the outside host **Ho** in response to the KOP REQ message. This message will be communicated to the outside host **Ho** in the same manner as described for the KOP ACK message. The outside host **Ho** will respond to the KOP RSP message with another KOP REQ message, which contains the information requested by the KOP RSP message. The second KOP REQ message will be communicated to the inside host **Hi** in the same manner as described for the first KOP REQ message. Multiple of these described KOP RSP/ KOP REQ message exchanges **224** are allowed.
- The inside host **Hi** can send **226** a KOF FIN message to the outside host **Ho** to terminate a relay connection initiated through a KOP ACK message. The KOF FIN message is relayed to the outside host in the same manner as that described for the KOP ACK message. Note that KOF FIN and KOF ACK messages are used in case the RS 22 relays all traffic data.

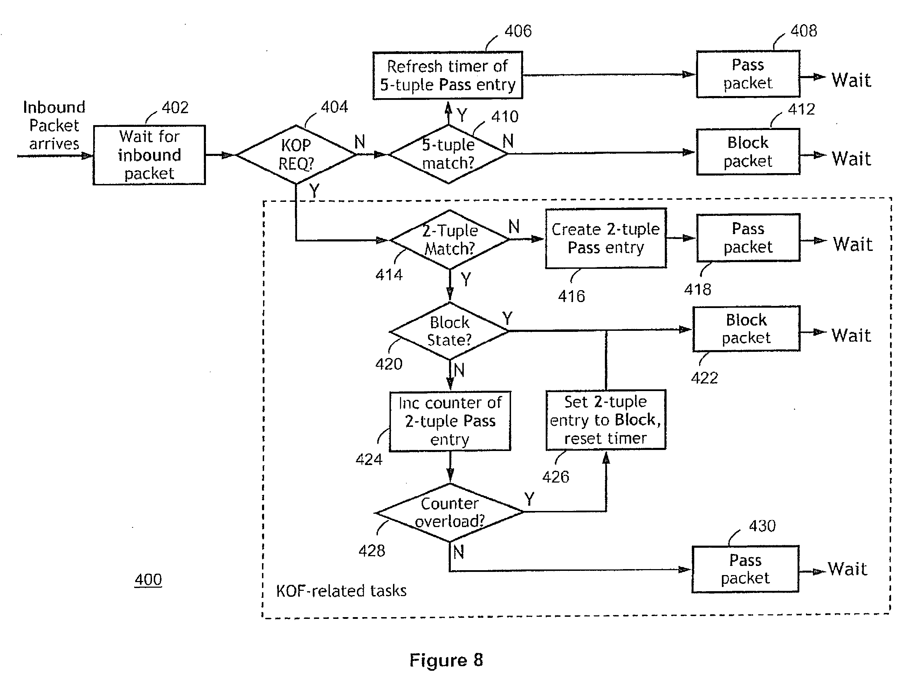

Figure 8 is a flow chart illustrating a method 400 of handling inbound packets performed by the integrated KOF firewall 12 according to the embodiment depicted in **Fig. 3** part a. The flow charts do not include state transitions shown in **Fig. 5** that are due to timer expiry.

Referring to **Fig.** 8, the method **400** waits **402** for an inbound packet to arrive at the integrated KOF firewall 12. When an inbound packet arrives, the method determines **404** if the packet is a KOP REQ message. If it is not a KOP REQ message, the method determines **410** if the packet matches a 5-tuple entry already stored on the integrated KOF firewall **12.** If there is a matching 5-tuple entry, then the method refreshes **406** a timer corresponding to the 5-tuple entry and passes **408** the packet to the inside host **Hi.** The method then returns to waiting for another inbound packet. Otherwise, if the method determines **410** that there is no matching 5-tuple entry on the integrated KOF firewall **12,** then the packet is blocked **412,** and the method returns to waiting for an inbound packet.

If the method **400** determines **404** that the packet is a KOP REQ message, then it determines **414** if the there is a 2-tuple entry on the integrated KOF firewall **12** that matches the packet. If there is no such matching 2-tuple entry, then the method creates **416** a 2-tuple entry for the packet and puts the entry into the pass state. The method then passes **418** the packet to the inside host **Hi** and returns to waiting for another inbound packet. If the method determines **414** that there is a matching 2-tuple entry, it determines **420** if that entry is in the block state. If the entry is in the block state, then the method blocks **422** the packet and returns to waiting for another inbound packet. However, if the method determines **420** that the 2-tuple entry is not in the block state, it increments a 2-tuple counter corresponding to the entry and then determines **428** if the counter has overloaded. If the counter has overloaded, the method sets **426** the 2-tuple entry to the block state and resets a timer for the entry. The method then blocks **422** the packet and returns to waiting for another inbound packet. However, if the counter has not overloaded, the method passes **430** the packet to the inside host **Hi** and then returns to waiting for another inbound packet.

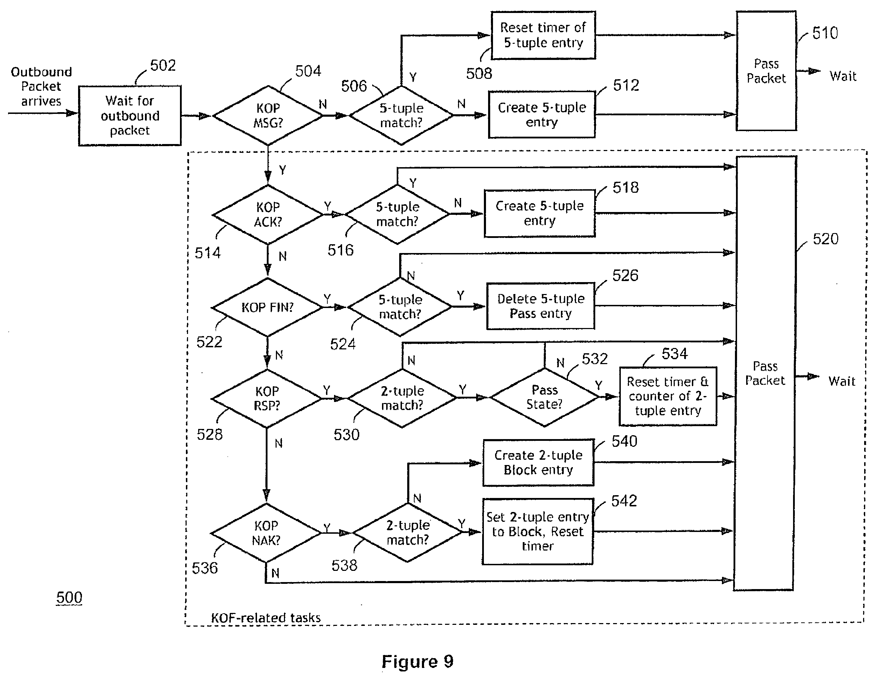

**Figure 9** is a flow chart illustrating a method **500** of handling outbound packets performed by the integrated KOF firewall **12** according to the embodiment depicted in **Fig. 3** part a. The flow charts do not include state transitions shown in **Fig. 5** that are due to timer expiry.

Referring to **Fig. 9****,** the method **500** waits **502** for an outbound packet to arrive at the integrated KOF firewall **12.** Upon receiving an outbound packet, the method determines **504** if the packet is a KOP message. If the packet is not a KOP message, the method then determines **506** if there is a 5-tuple entry on the integrated KOF firewall **12** that matches the packet. If there is such a matching 5-tuple entry, the method resets **508** the timer corresponding to the entry and passes **510** the packet towards the outside host **Ho.** The method then returns to waiting for another outbound packet. If there is no such matching 5-tuple entry, the method creates **512** a 5-tuple entry corresponding to the packet and passes **510** the packet towards the outside host **Ho.** The method then returns to waiting for another outbound packet.

If the method determines **504** that the packet is a KOP message, it then determines **514** if the packet is a KOP ACK message. In the affirmative case, the method determines **516** if there is a matching 5-tuple entry on the integrated KOF firewall **12.** If there is such a matching 5-tuple entry, the method passes **520** the packet towards the outside host **Ho** and returns to waiting for another outbound packet. Otherwise, if there is no such matching 5-tuple entry the method creates **518** a 5-tuple entry corresponding to the packet and then passes the packet towards the outside host **Ho.** The method then returns to waiting for another outbound packet.

If the method determines **514** that the packet is not a KOP ACK message, it then determines **522** if the packet is a KOP FIN message. In the affirmative case, the method determines **524** if there is a matching 5-tuple entry on the integrated KOF firewall **12.** If there is no such matching entry, the method passes **520** the packet towards the outside host **Ho** and returns to waiting for another outbound packet. Otherwise, if there is a matching 5-tuple entry the method deletes **526** the 5-tuple entry and then passes **520** the packet towards the outside host **Ho.** The method then returns to waiting for another outbound packet.

If the method determines **522** that the packet is not a KOP FIN message, it then determines **528** if the packet is a KOP RSP message. In the affirmative case, the method determines **530** if there is a 2-tuple entry on the integrated KOF firewall **12** that matches the packet. If there is no such matching 2-tuple entry, the method passes **520** the packet towards the outside host **Ho** and returns to waiting for another outbound packet. Otherwise, if there is a matching 2-tuple entry the method determines **532** if the entry is in the pass state. In the affirmative case, the method resets **534** the timer and counter corresponding to the 2-tuple entry, and then passes **520** the packet towards the outside host **Ho.** The method then returns to waiting for another outbound packet. Otherwise, if the method determines **532** that the 2-tuple entry is not in the pass state, it passes **520** the packet towards the outside host **Ho** and then returns to waiting for another outbound packet.

If the method determines **528** that the packet is not a KOP RSP message, it then determines **536** if the packet is a KOP NAK message. In the affirmative case, the method determines **538** if there is a 2-tuple entry on the integrated KOF firewall **12** that matches the packet. If there is no such matching 2-tuple entry, the method creates **540** on the integrated KOF firewall **12** a 2-tuple entry corresponding to the packet and sets the entry to the block state. The method then passes **520** the packet towards the outside host **Ho** and returns to waiting for another outbound packet. Otherwise, if there is a matching 2-tuple entry the method sets **542** the entry to the block state and resets the timer corresponding to the entry. The method then passes **520** the packet towards the outside host **Ho** and returns to waiting for another outbound packet.

If the method determines **536** that the packet is not a KOP NAK message, it passes **520** the packet towards the outside host **Ho** and returns to waiting for another outbound packet.

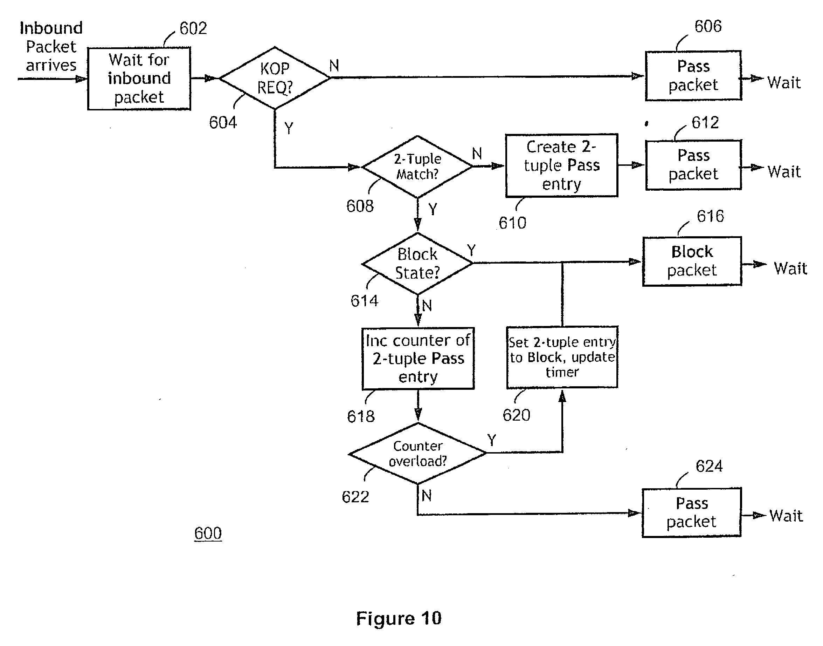

**Figure 10** is a flow chart illustrating a method **600** of handling inbound packets performed by the KOF **18** in series with the firewall **20** according to the embodiment depicted in **Fig. 3** part b. The flow charts do not include state transitions shown in **Fig. 6** that are due to timer expiry.

Referring to **Fig. 10****,** the method **600** waits **602** for an inbound packet to arrive at the KOF **18.** When an inbound packet arrives, the method determines **604** if the packet is a KOP REQ message. If it is not a KOP REQ message, the method passes **606** the packet to the FW **20** and returns to waiting for another inbound packet. If the packet is a KOP REQ message, the method determines **608** if the packet matches a 2-tuple entry already stored on the KOF **18.** If there is no such matching 2-tuple entry, then the method creates **610** a 2-tuple entry corresponding to the packet and sets the entry to the pass state. The method then passes **612** the packet to the FW **20** and returns to waiting for another inbound packet. If the method determines **608** that there is a matching 2-tuple entry, the method then determines **614** if the entry is in the block state. In the affirmative case, the method blocks **616** the packet and returns to waiting for another inbound packet.

If the method determines **614** that the 2-tuple entry is not in the block state, it increments a 2-tuple counter corresponding to the entry, which is in the pass state, and then determines **622** if the counter has overloaded. If the counter has overloaded, the method sets **620** the 2-tuple entry to the block state and resets a timer for the entry. The method then blocks **616** the packet and returns to waiting for another inbound packet. However, if the counter has not overloaded, the method passes **624** the packet to the FW **20** and then returns to waiting for another inbound packet.

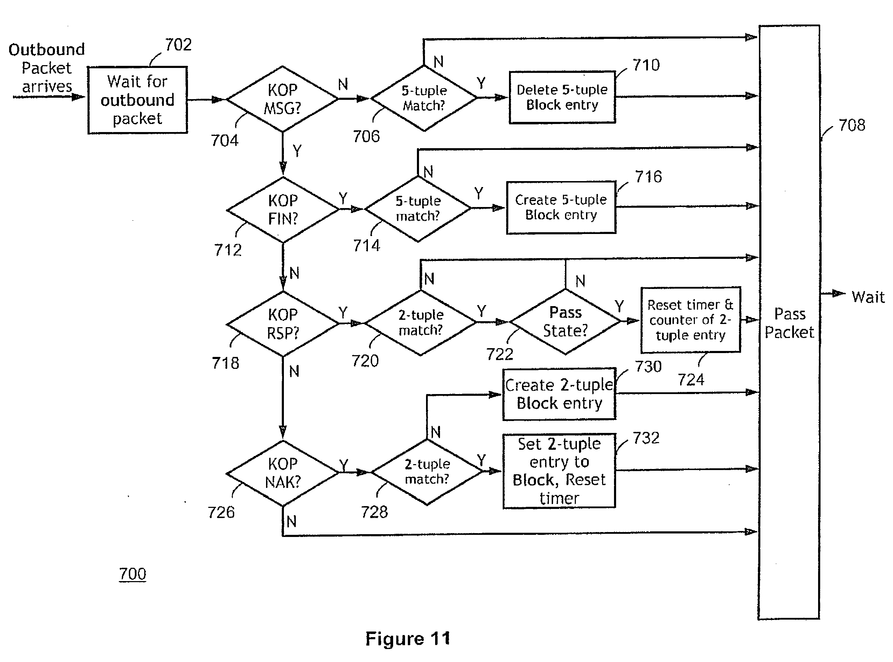

**Figure 11** is a flow chart illustrating a method **700** of handling inbound packets performed by the KOF **18** in series with the firewall **20** according to the embodiment depicted in **Fig. 3** part b. The flow charts do not include state transitions shown in **Fig 6** that are due to timer expiry.

Referring to **Fig. 11****,** the method **700** waits **702** for an outbound packet to arrive at the KOF **18.** Upon receiving an outbound packet, the method determines **704** if the packet is a KOP message. If the packet is not a KOP message, the method then determines **706** if there is a 5-tuple entry on the KOF **18** that matches the packet. If there is no such matching 5-tuple entry, the method passes **708** the packet towards the outside host **Ho.** The method then returns to waiting for another outbound packet. If there is such a matching 5-tuple entry, the method deletes **710** the 5-tuple entry, which entry is in the block state, and passes **708** the packet towards the outside host **Ho.** The method then returns to waiting for another outbound packet.

If the method determines **704** that the packet is a KOP message, it then determines **712** if the packet is a KOP FIN message. In the affirmative case, the method determines **714** if there is a matching 5-tuple entry on the KOF **18.** If there is no such matching 5-tuple entry, the method passes **708** the packet towards the outside host **Ho** and returns to waiting for another outbound packet. Otherwise, if there is a matching 5-tuple entry the method creates **716** a 5-tuple entry corresponding to the packet and sets the entry to the block state. The method then passes **708** the packet towards the outside host **Ho.** The method then returns to waiting for another outbound packet.

If the method determines **712** that the packet is not a KOP FIN message, it then determines **718** if the packet is a KOP RSP message. In the affirmative case, the method determines **720** if there is a matching 2-tuple entry on the KOF **18.** If there is no such matching 2-tuple entry, the method passes **708** the packet towards the outside host **Ho** and returns to waiting for another outbound packet. Otherwise, if there is a matching 2-tuple entry the method determines **722** if the entry is in the pass state. In the affirmative case, the method resets **724** the timer and counter corresponding to the entry, and then passes **708** the packet towards the outside host **Ho.** The method then returns to waiting,for another outbound packet. Otherwise, if the matching 2-tuple entry is not in the pass state, the method passes **708** the packet towards the outside host **Ho** and returns to waiting for another outbound packet.

If the method determines **718** that the packet is not a KOP RSP message, it then determines **726** if the packet is a KOP NAK message. In the affirmative case, the method determines **728** if there is a 2-tuple entry on the KOF **18** that matches the packet. If there is no such matching 2-tuple entry, the method creates **730** on the KOF **12** a 2-tuple entry corresponding to the packet and sets the entry to the block state. The method then passes **708** the packet towards the outside host **Ho** and returns to waiting for another outbound packet. Otherwise, if there is a matching 2-tuple entry the method sets **732** the entry to the block state and resets the timer corresponding to the entry. The method then passes **708** the packet towards the outside host **Ho** and returns to waiting for another outbound packet.

If the method determines **726** that the packet is not a KOP NAK message, it passes **708** the packet towards the outside host **Ho** and returns to waiting for another outbound packet.

### Application to Network Address Translators

Most NATs combine network address or network address/port translation with a firewall function. In these cases, the same KOF methods as discussed above can be applied. Due to the NAT, however, the internal address and port numbers of the inside host **Hi** are different than its public address and port numbers translated by the **NAT.** Therefore, the outside host **Ho** may not know how to reach the inside host **Hi.** Further, the inside host **Hi** may not know its public IP address. This situation affects KOP messages as well as the establishment transport connections.

If KOP messages are supported by a conventional transport type (UDP or TCP), the host can use Connection Traversal Utilities for NAT (STUN) proposed by the IETF (RFC 5389) to find its KOP public IP address and port number. The inside host **Hi** can publish these data in DNS so that they are publically available.

The inside host **Hi** can also use the STUN method to find the public IP address and port number for a transport connection it wishes to set up. The outcome of the STUN method can then be forwarded to the remote host in the KOP REQ message at connection setup. If the remote host also resides behind a NAT, it uses the same STUN method and returns its own public IP address and port number in the KOP ACK or KOP RSP message. Then both of the inside and outside hosts can forward transport packets to each other, which action will create 5-tuple entries on the respective NATs. This technique, often referred to as "hole punching", enables a transport connection to be established between both hosts.

The same principal methods apply when the KOP messages are multiplexed onto the transport connection, e.g. via IP Extension header (IPv6) or IP Option header (IPv4), or if they are embedded into the transport layer. This method has the downside that there is not only one KOP address and port number that can be published in the host's DNS server. In this case, a RS can be used. The RS performs the STUN service for both hosts (if they are behind NATs) and includes them into the KOP message exchange.

Finally, if one or both NATs are symmetric NATs, the function of the RS could be extended from KOP message exchange to the tunneling of transport data.

Numerous modifications, variations and adaptations may be made to the embodiments of the invention described above without departing from the scope of the invention, which is defined in the claims.

## Claims

1. A method of establishing a connection between a first host system and a second host system through a firewall protecting the second host system, comprising:
performing, by a knock-on-feature, KOF, apparatus (12):
receiving a first message sent by the first host system (Ho);
determining the first message is of a first type for establishing the connection between the first host system (Ho) and a second host system (Hi);
determining respective addresses of the first (Ho) and second hosts systems (Hi) from the first message;
determining if any state information exists on the KOF apparatus (12) for a 2-tuple corresponding to the addresses of the first (Ho) and second host systems (Hi); and
sending the first message to the second host system if no said state information for the 2-tuple exists on the KOF (12) apparatus, **characterised in that** the method further comprises the steps of:
If no state information for the 2-tuple exists on the KOF apparatus (12): initializing and starting a first timer for the 2-tuple and initializing and incrementing a message counter for the 2-tuple;
if state information for the 2-tuple exists on the KOF apparatus (12): checking the first timer; removing said state information on the KOF apparatus (12) if the first timer has expired;
checking a count of the message counter; if the count has reached a predetermined value and the first timer has not expired, starting a second timer for the 2-tuple and dropping the first message; and
sending the first message to the second host system (Hi) if the count has not reached the predetermined value and the first timer has not expired.

2. The method of claim 1, further comprising, if said state information for the 2-tuple exists on the KOF apparatus (12):
checking the second timer;
dropping the first message if the second timer has not expired; and
removing all said state information for the 2-tuple on the KOF apparatus (12) if the second timer has expired.
receiving a second message sent by the second host system (Hi);
determining that the second message is of a second type for requesting information from the first host system (Ho) in response to the first message; and
sending the second message to the first host system (Ho).

3. The method of claim 1, where the KOF apparatus (12) is external to and in series with the firewall, the method further comprising:
checking the second timer;
dropping the first message if the second timer has not expired;
removing, if the second timer has expired, all said state information for the 2-tuple on the KOF apparatus (12) including 5-tuple state information for the 2-tuple, the 5-tuple state information including in addition to the 2-tuple and with respect to the connection: an indication of protocol type, an indication of a first port of the first host system (Ho), and an indication of a second port of the second host system (Hi).

4. The method of claim 1 further comprising:
determining an amount of state information existing on the KOF apparatus (12) with respect to the second host system (Hi);
combining, responsive to the amount exceeding a predetermined maximum, state information of two host system pairs, each pair comprising the second host system (Hi) and another host system that is different in each pair, into state information for one host system pair comprising the address of the second host system and an address prefix common to respective addresses of the other host systems of the two host system pairs;
setting a combined timer for said one host system pair to a minimum of respective first timers of the two host system pairs; and
setting a combined message counter for said one host system pair to a maximum of respective message counters for the two host system pairs.

5. The method of claim 1 further comprising:
receiving a third message sent by the second host system (Hi);
determining the third message is of a third type for terminating the connection between the first (Ho) and second host systems (Hi); and
removing from the KOF (12), responsive to receiving the third type of message, 5-tuple state information for the 2-tuple, the 5-tuple state information including in addition to the 2-tuple and with respect to the connection: an indication of protocol type, an indication of a first port of the first host system (Ho), and an indication of a second port of the second host system (Hi).

6. The method, of claim 5, where the KOF apparatus (12) is part of the firewall, the method further comprises:
receiving a fourth message sent by the second host system (Hi);
determining the fourth message is of a fourth type for initiating the connection responsive to the first message;
starting a third timer with respect to the 5-tuple.
receiving communication traffic sent by the first host system (Ho) and destined to the second host system (Hi);
checking the third timer;
determining if state information for the 5-tuple exists on the firewall; and
passing the communication traffic responsive to the third timer having not expired and responsive to the state information for the 5-tuple existing on the firewall.

7. The method of claim 1, where the KOF apparatus (12) is part of a relay server that is external to the firewall, the step of receiving comprises receiving the first message over a prior established first signaling connection between the first host system (Ho) and the relay server; and the step of sending comprises sending the first message to the second host system (Hi) over a prior established signaling connection between the second host system (Hi) and the relay server.

8. The method of claim 1, wherein the step of sending further comprises:
creating on the KOF (12) a 2-tuple entry corresponding to the addresses of the first (Ho) and second host systems (Hi); and
setting that 2-tuple entry to a pass state.

9. The method of claim 1 further comprising:
determining an amount of state information existing on the KOF apparatus (12) with respect to the first host system (Ho); and
combining, responsive to the amount exceeding a predetermined maximum, state information of two host system pairs, each pair comprising the first host system (Ho) and another host system that is different in each pair, into state information for one host system pair comprising the address of a second host system (Hi) and an address prefix common to respective addresses of the other host systems of the two host system pairs.

## Patentansprüche

1. Verfahren für das Herstellen einer Verbindung zwischen einem ersten Hostsystem und einem zweiten Hostsystem durch eine das zweite Hostsystem schützende Firewall hindurch, umfassend:
das durch eine Vorrichtung (12) mit Knock-on-Funktion (KOF) erfolgende Ausführen folgender Schritte:
Empfangen einer ersten, vom ersten Hostsystem (Ho) gesendeten Nachricht;
Bestimmen, dass die erste Nachricht einem ersten Typ entspricht, um die Verbindung zwischen dem ersten Hostsystem (Ho) und einem zweiten Hostsystem (Hi) herzustellen;
Bestimmen jeweiliger Adressen des ersten (Ho) und zweiter Hostsysteme (Hi) aus der ersten Nachricht;
Bestimmen, ob auf der KOF-Vorrichtung (12) Statusinformationen für ein 2-Tupel vorliegen, die den Adressen des ersten (Ho) und der zweiten Hostsysteme (Hi) entsprechen; und
Senden der ersten Nachricht an das zweite Hostsystem, wenn keine solchen Statusinformationen für das 2-Tuple auf der KOF-Vorrichtung (12) vorliegen,
**dadurch gekennzeichnet, dass** das Verfahren weiterhin die folgenden Schritte umfasst:
wenn keine Statusinformationen für das 2-Tuple auf der KOF-Vorrichtung (12) vorliegen: das Initialisieren und Starten eines ersten Timers für das 2-Tuple und das Initialisieren und Inkrementieren eines Nachrichtenzählwerks für das 2-Tuple;
wenn Statusinformationen für das 2-Tuple auf der KOF-Vorrichtung (12) vorliegen: das Checken des ersten Timers; besagte Statusinformationen auf der KOF-Vorrichtung (12) entfernend, wenn der erste Timer abgelaufen ist;
das Checken einer Zählung im Nachrichtenzählwerk;
das Starten eines zweiten Timers für das 2-Tuple und das Verwerfen der ersten Nachricht dann, wenn die Zählung einen vordefinierten Wert erreicht hat und der erste Timer noch nicht abgelaufen ist; und
das Senden der ersten Nachricht an das zweite Hostsystem (Hi) dann, wenn die Zählung den vordefinierten Wert nicht erreicht hat und der erste Timer noch nicht abgelaufen ist.

2. Verfahren nach Anspruch 1, weiterhin Folgendes umfassend, wenn besagte Statusinformation für das 2-Tuple auf der KOF-Vorrichtung (12) existiert:
Checken des zweiten Timers;
Verwerfen der ersten Nachricht, wenn der zweite Timer noch nicht abgelaufen ist; und
Entfernen aller besagten Statusinformationen für das 2-Tuple von der KOF-Vorrichtung (12) dann, wenn der zweite Timer abgelaufen ist.
Empfangen einer zweiten, vom zweiten Hostsystem (Hi) gesendeten Nachricht;
das Bestimmen, dass die zweite Nachricht einem zweiten Typ entspricht, um vom ersten Hostsystem (Ho) in Reaktion auf die erste Nachricht Informationen anzufordern; und
das Senden einer zweiten Nachricht an das erste Hostsystem (Ho).

3. Verfahren nach Anspruch 1, wobei die KOF-Vorrichtung (12) im Verhältnis zur Firewall extern und in Reihe geschaltet ist, wobei das Verfahren weiterhin umfasst:
das Checken des zweiten Timers;
das Verwerfen der ersten Nachricht, wenn der zweite Timer noch nicht abgelaufen ist;
wenn der zweite Timer abgelaufen ist, das Entfernten aller Statusinformationen zu dem 2-Tuple von der KOF-Vorrichtung (12), einschließlich 5-Tuple-Statusinformationen zum 2-Tuple, wobei die 5-Tuple-Statusinformationen über das 2-Tuple hinaus und hinsichtlich der Verbindung Folgendes umfassen: eine Angabe des Protokolltyps, eine Angabe eines ersten Eingangs des ersten Hostsystems (Ho) und eine Angabe eines zweiten Eingangs des zweiten Hostsystems (Hi).

4. Verfahren nach Anspruch 1, weiterhin umfassend:
das Bestimmen einer Menge an Statusinformationen, die auf der KOF-Vorrichtung (12) hinsichtlich des zweiten Hostsystems (Hi) vorliegen;
das in Abhängigkeit von der ein vorgegebenes Maximum übersteigenden Menge erfolgende Kombinieren von Statusinformationen der beiden Hostsystem-Paare, wobei jedes Paar das zweite Hostsystem (Hi) und ein weiteres Hostsystem umfasst, das in jedem Paar ein anderes ist, in Statusinformationen für ein Hostsystem-Paar, welche die Adresse des zweiten Hostsystems und ein Adressen-Präfix umfassen, welches den jeweiligen Adressen des anderen Hostsystems der beiden Hostsysteme gemeinsam ist;
das Einstellen eines kombinierten Timers für besagtes eine Hostsystem-Paar auf ein Minimum des jeweiligen ersten Timers der beiden Hostsystem-Paare; und
das Einstellen eines kombinierten Nachrichtenzählwerks für besagtes eine Hostsystem-Paar auf ein Maximum jeweiliger Nachrichtenzählwerke der beiden Hostsystem-Paare.

5. Verfahren nach Anspruch 1, weiterhin umfassend:
Empfangen einer dritten, vom zweiten Hostsystem (Hi) gesendeten Nachricht;
Bestimmen, dass die dritte Nachricht einem dritten Typ entspricht, um die Verbindung zwischen dem ersten (Ho) und dem zweiten Hostsystem (Hi) zu beenden;
in Reaktion auf den Empfang der Nachricht des dritten Typs, das Entfernten aller 5-Tuple-Statusinformationen zu dem 2-Tuple von der KOF-Vorrichtung (12), wobei die 5-Tuple-Statusinformationen in Ergänzung zum 2-Tuple und hinsichtlich der Verbindung Folgendes umfassen: eine Angabe des Protokolltyps, eine Angabe eines ersten Eingangs des ersten Hostsystems (Ho) und eine Angabe eines zweiten Eingangs des zweiten Hostsystems (Hi).

6. Verfahren nach Anspruch 5, wobei die KOF-Vorrichtung (12) Teil der Firewall ist, wobei das Verfahren weiterhin umfasst:
Empfangen einer vierten, vom zweiten Hostsystem (Hi) gesendeten Nachricht;
Bestimmen der vierten Nachricht als Nachricht eines vierten Typs zum Zweck des Initiierens der Verbindung in Reaktion auf die erste Nachricht;
Starten des dritten Timers bezüglich des 5-Tuple;
Empfangen des vom ersten Hostsystem (Ho) an das zweite Hostsystem (Hi) gesendeten Kommunikationsverkehrs;
Checken des dritten Timers;
Feststellen, ob auf der Firewall Statusinformationen für das 5-Tuple existieren; und
in Reaktion darauf, dass der dritte Timer nicht abgelaufen ist, und darauf dass die Statusinformationen für das 5-Tuple auf der Firewall existieren, das Weiterleiten des Kommunikationsverkehrs.

7. Verfahren nach Anspruch 1, wobei die KOF-Vorrichtung (12) Teil eines außerhalb der Firewall liegenden Relaisservers ist, wobei der Schritt des Empfangens das Empfangen der ersten Nachricht über eine zuvor hergestellte, erste Signalisierungsverbindung zwischen dem ersten Hostsystem (Ho) und dem Relaisserver umfasst; und wobei der Schritt des Sendens das Senden der ersten Nachricht über eine zuvor hergestellte Signalisierungsverbindung zwischen dem zweiten Hostsystem (Hi) und dem Relaisserver an das zweite Hostsystem (Hi) umfasst.

8. Verfahren nach Anspruch 1, wobei der Schritt des Sendens weiterhin umfasst:
Erstellen auf der KOF-Vorrichtung (12) eines 2-Tupel-Eintrags, der den Adressen des ersten Hostsystems (Ho) und der zweiten Hostsysteme (Hi) entspricht; und
Setzen des 2-Tuple-Eintrags auf einen Weiterleitungs-Status.

9. Verfahren nach Anspruch 1, weiterhin umfassend:
Bestimmen einer Menge an Statusinformationen, die auf der KOF-Vorrichtung (12) hinsichtlich des ersten Hostsystems (Ho) vorliegen; und
das in Abhängigkeit von der ein vorgegebenes Maximum übersteigenden Menge erfolgende Kombinieren von Statusinformationen der beiden Hostsystem-Paare, wobei jedes Paar das erste Hostsystem (Ho) und ein weiteres Hostsystem umfasst, das in jedem Paar ein anderes ist, in Statusinformationen für ein Hostsystem-Paar, welche die Adresse eines zweiten Hostsystems (Hi) und ein Adressen-Präfix umfassen, welches den jeweiligen Adressen des anderen Hostsystems der beiden Hostsysteme gemeinsam ist;

## Revendications

1. Procédé pour établir une connexion entre un premier système hôte et un deuxième système hôte au travers d'un pare-feu qui protège le deuxième système hôte, comprenant les étapes suivantes :
exécuter, par un appareil à fonctionnalité de frappe, KOF, (12), les opérations suivantes :
recevoir un premier message envoyé par le premier système hôte (Ho) ;
déterminer si le premier message est d'un premier type pour établir la connexion entre le premier système hôte (Ho) et un deuxième système hôte (Hi) ;
déterminer les adresses respectives des premier (Ho) et deuxième (Hi) systèmes hôtes à partir du premier message ;
déterminer s'il existe une quelconque information d'état sur l'appareil KOF (12) pour un 2-uplet correspondant aux adresses des premier (Ho) et deuxième (Hi) systèmes hôtes ; et
envoyer le premier message au deuxième système hôte si ladite information d'état pour le 2-uplet n'existe pas sur l'appareil KOF (12),
**caractérisé en ce que** le procédé comprend en outre les étapes suivantes :
s'il n'existe aucune information d'état pour le 2-uplet sur l'appareil KOF (12) : initialiser et démarrer un premier temporisateur pour le 2-uplet et initialiser et incrémenter un compteur de messages pour le 2-uplet ;
s'il existe une information d'état pour le 2-uplet sur l'appareil KOF (12) : contrôler le premier temporisateur ; supprimer ladite information d'état sur l'appareil KOF (12) si le premier temporisateur a expiré ;
contrôler une valeur comptée du compteur de messages ;
si la valeur comptée a atteint une valeur prédéterminée et que le premier temporisateur n'a pas expiré, démarrer un deuxième temporisateur pour le 2-uplet et abandonner le premier message ; et
envoyer le premier message au deuxième système hôte (Hi) si la valeur comptée n'a pas atteint la valeur prédéterminée et que le premier temporisateur n'a pas expiré.

2. Procédé selon la revendication 1, comprend en outre, si ladite information d'état pour le 2-uplet existe sur l'appareil KOF (12) :
contrôler le deuxième temporisateur ;
abandonner le premier message si le deuxième temporisateur n'a pas expiré ; et
supprimer la totalité de ladite information d'état pour le 2-uplet sur l'appareil KOF (12) si le deuxième temporisateur a expiré ;
recevoir un deuxième message envoyé par le deuxième système hôte (Hi) ;
déterminer que le deuxième message est d'un deuxième type pour demander des informations auprès du premier système hôte (Ho) en réponse au premier message ; et
envoyer le deuxième message au premier système hôte (Ho).

3. Procédé selon la revendication 1, selon lequel l'appareil KOF (12) est externe au pare-feu et en série avec celui-ci, le procédé comprenant en outre les étapes suivantes :
contrôler le deuxième temporisateur ;
abandonner le premier message si le deuxième temporisateur n'a pas expiré ;
supprimer, si le deuxième temporisateur a expiré, la totalité de ladite information d'état pour le 2-uplet sur l'appareil KOF (12), y compris l'information d'état de 5-uplet pour le 2-uplet, l'information d'état de 5-uplet incluant en plus du 2-uplet et concernant la connexion : une indication du type de protocole, une indication d'un premier port du premier système hôte (Ho) et une indication d'un deuxième port du deuxième système hôte (Hi).

4. Procédé selon la revendication 1, comprenant en outre les étapes suivantes :
déterminer une quantité d'informations d'état existante sur l'appareil KOF (12) concernant le deuxième système hôte (Hi) ;
combiner, en réponse au fait que la quantité dépasse un maximum prédéterminé, les informations d'état de deux paires de systèmes hôtes, chaque paire comprenant le deuxième système hôte (Hi) et un autre système hôte qui est différent dans chaque paire, en des informations d'état pour une paire de systèmes hôtes comprenant l'adresse du deuxième système hôte et un préfixe d'adresse commun aux adresses respectives des autres systèmes hôtes des deux paires de systèmes hôtes ;
régler un temporisateur combiné pour ladite une paire de systèmes hôtes à un minimum des premiers temporisateurs respectifs des deux paires de systèmes hôtes ; et
régler un compteur de messages combiné pour ladite une paire de systèmes hôtes à un maximum des compteurs de messages respectifs pour les deux paires de systèmes hôtes.

5. Procédé selon la revendication 1, comprenant en outre les étapes suivantes :
recevoir un troisième message envoyé par le deuxième système hôte (Hi) ;
déterminer si le troisième message est d'un troisième type pour mettre fin à la connexion entre les premier (Ho) et deuxième (Hi) systèmes hôtes ; et
supprimer du KOF (12), en réaction à la réception du troisième type de message, l'information d'état de 5-uplet pour le 2-uplet, l'information d'état de 5-uplet incluant en plus du 2-uplet et concernant la connexion : une indication du type de protocole, une indication d'un premier port du premier système hôte (Ho) et une indication d'un deuxième port du deuxième système hôte (Hi).

6. Procédé selon la revendication 5, selon lequel l'appareil KOF (12) fait partie du pare-feu, le procédé comprenant en outre les étapes suivantes :
recevoir un quatrième message envoyé par le deuxième système hôte (Hi) ;
déterminer si le quatrième message est d'un quatrième type pour initier la connexion en réaction au premier message ;
démarrer un troisième temporisateur concernant le 5-uplet ;
recevoir un trafic de communication envoyé par le premier système hôte (Ho) et destiné au deuxième système hôte (Hi) ;
contrôler le troisième temporisateur ;
déterminer si l'information d'état de 5-uplet existe sur le pare-feu ; et
transférer le trafic de communication en réaction au fait que le troisième temporisateur n'a pas expiré et en réaction à l'existence de l'information d'état de 5-uplet sur le pare-feu.

7. Procédé selon la revendication 1, selon lequel l'appareil KOF (12) fait partie d'un serveur relais qui est externe au pare-feu, l'étape de recevoir comprenant recevoir le premier message sur une première connexion de signalisation préalablement établie entre le premier système hôte (Ho) et le serveur relais ; et l'étape d'envoyer comprenant envoyer le premier message au deuxième système hôte (Hi) sur une connexion de signalisation préalablement établie entre le deuxième système hôte (Hi) et le serveur relais.

8. Procédé selon la revendication 1, selon lequel l'étape d'envoyer comprend en outre :
créer sur le KOF (12) une entrée 2-uplet correspondant aux adresses des premier (Ho) et deuxième (Hi) systèmes hôtes ; et
régler cette entrée 2-uplet à un état de transfert.

9. Procédé selon la revendication 1, comprenant en outre les étapes suivantes :
déterminer une quantité d'informations d'état existante sur l'appareil KOF (12) concernant le premier système hôte (Ho) ; et
combiner, en réponse au fait que la quantité dépasse un maximum prédéterminé, les informations d'état de deux paires de systèmes hôtes, chaque paire comprenant le premier système hôte (Ho) et un autre système hôte qui est différent dans chaque paire, en des informations d'état pour une paire de systèmes hôtes comprenant l'adresse d'un deuxième système hôte (Hi) et un préfixe d'adresse commun aux adresses respectives des autres systèmes hôtes des deux paires de systèmes hôtes.
